(19) **Europäisches Patentamt / European Patent Office / Office européen des brevets**

(11) **EP 4 240 629 B1**

(12) **FASCICULE DE BREVET EUROPEEN**

(45) Date de publication et mention de la délivrance du brevet:
**27.11.2024 Bulletin 2024/48**

(21) Numéro de dépôt: **21806004.4**

(22) Date de dépôt: **13.10.2021**

(51) Classification Internationale des Brevets (IPC):
**B60W 40/10** *(2012.01)*     **B60W 30/14** *(2006.01)*

(52) Classification Coopérative des Brevets (CPC):
**B60W 40/10; B60W 30/14;** B60W 2520/10;
B60W 2554/802; B60W 2554/804; B60W 2720/10;
B60W 2754/30

(86) Numéro de dépôt international:
**PCT/FR2021/051780**

(87) Numéro de publication internationale:
**WO 2022/096794 (12.05.2022 Gazette 2022/19)**

(54) **PROCÉDÉ ET DISPOSITIF DE DÉTERMINATION D'UN TEMPS DE MANOEUVRE D'UN VÉHICULE AUTONOME**

VERFAHREN UND VORRICHTUNG ZUM BESTIMMEN EINER MANÖVERZEIT EINES AUTONOMEN FAHRZEUGS

METHOD AND DEVICE FOR DETERMINING A MANOEUVRE TIME OF AN AUTONOMOUS VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2020 FR 2011239**

(43) Date de publication de la demande:
**13.09.2023 Bulletin 2023/37**

(73) Titulaire: **Stellantis Auto SAS**
**78300 Poissy (FR)**

(72) Inventeurs:
• **VIVET, Luc**
 **75016 Paris 16 (FR)**
• **KOUBACHI, Mouad**
 **23000 Beni Mellal (MA)**

(56) Documents cités:
EP-A1- 3 731 204          EP-A2- 3 147 169
DE-A1- 102012 213 321     DE-A1- 102015 221 920

**EP 4 240 629 B1**

**Description**

L'invention est dans le domaine des systèmes d'aide à la conduite de véhicule autonome. En particulier, l'invention concerne un procédé et un dispositif de détermination d'un temps de manoeuvre d'un véhicule autonome, dit égo-véhicule, circulant selon une première vitesse sur une voie de circulation, ledit égo-véhicule étant précédé par un véhicule, dit véhicule cible, circulant sur la voie de circulation selon une deuxième vitesse, la manoeuvre étant destinée à adapter la vitesse de l'égo-véhicule de la première vitesse vers la deuxième vitesse.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

On connait de DE102015221920 un procédé pour commander une planification de trajectoire d'un véhicule.

Les procédés aptes à assister la conduite du véhicule sont aussi nommés ADAS (de l'acronyme anglais « Advanced Driver Assistance Systems »), systèmes ADAS ou systèmes d'aide à la conduite. Un régulateur de vitesse de véhicule, RVV, est un système ADAS connu qui régule la vitesse du véhicule selon une consigne de vitesse donnée, dite vitesse consigne. Un régulateur de vitesse véhicule adaptatif, ou ACC (de l'acronyme anglais « Adaptative Cruise Control »), est aussi un système ADAS connu qui régule la vitesse du véhicule et un temps inter-véhiculaire, le temps inter-véhiculaire représentant une durée séparant le passage de l'avant ou de l'arrière de deux véhicules successifs sur une même voie de circulation. Par exemple, le temps inter-véhiculaire est un paramètre prédéterminé par le conducteur ou par défaut selon une préconisation de la réglementation en vigueur (2 secondes par exemple). Le temps inter-véhiculaire prédéterminé est également dit ci-après temps cible. Un dispositif d'un véhicule comportant la fonction ACC est apte à acquérir la vitesse du véhicule, la vitesse du véhicule qui précède, dit véhicule cible, et la distance entre le véhicule et le véhicule cible. La détermination d'un temps inter-véhiculaire est obtenue à partir de la distance entre le véhicule et le véhicule qui suit, et à parti de la vitesse du véhicule qui suit.

Un égo-véhicule porteur de la fonction ACC activée à une vitesse consigne, va réguler la vitesse du véhicule en adaptant la vitesse consigne pour respecter le temps inter-véhiculaire prédéterminé. Dès que la fonction ACC détecte un véhicule cible, la fonction va acquérir une distance inter-véhiculaire, une première vitesse représentant une vitesse de l'égo-véhicule et une deuxième vitesse représentant une vitesse cible, puis réguler la vitesse du véhicule selon la vitesse consigne adaptée pour respecter le temps inter-véhiculaire.

On entend par « adapter » une vitesse de l'égo-véhicule d'une première vitesse vers une deuxième vitesse une régulation par, par exemple, un régulateur de vitesse véhicule adaptatif qui consiste à augmenter et/ou diminuer la vitesse de l'égo véhicule pour atteindre la deuxième vitesse selon un profil de vitesse déterminé par le régulateur. L'inconvénient est que cette régulation commence dès que le véhicule cible est détecté. Si le véhicule cible est loin ou si le véhicule, qui s'insère dans la voie dans laquelle circule l'égo-véhicule à une distance un peu plus grande que la distance inter-véhicule cible (distance de 10% supérieur par exemple) et à une vitesse un peu inférieure à la vitesse de l'égo-véhicule (par exemple de 10 à 20% inférieure), la variation de vitesse générée par le régulateur de vitesse est très faible et est peu perceptible par un conducteur. Le conducteur ne sait pas si la fonction ACC a bien pris en compte le véhicule cible. Par ailleurs, il n'est pas nécessaire de commencer tout de suite à diminuer la vitesse de l'égo-véhicule à la vitesse cible ce qui engendre un temps inter-véhicule (donc aussi une distance inter-véhiculaire) supérieure à celle prédéterminée par le conducteur.

Un objet de la présente invention est de remédier au problème précité, en particulier déterminer à quel moment un système ADAS de type régulateur de vitesse adapatif doit commencer à adapter la vitesse du régulateur de vitesse véhicule lorsqu'un véhicule cible est détecté.

A cet effet, un premier aspect de l'invention concerne un procédé de détermination d'un temps de manoeuvre d'un véhicule autonome, dit égo-véhicule, circulant selon une première vitesse sur une voie de circulation, ledit égo-véhicule étant précédé par un véhicule, dit véhicule cible, circulant sur la voie de circulation selon une deuxième vitesse, la manoeuvre étant destinée à adapter la vitesse de l'égo-véhicule de la première vitesse vers la deuxième vitesse, ledit procédé étant mis en oeuvre par un processeur et comportant les étapes de :

- Acquisition de la première vitesse, dite vitesse de l'égo-véhicule ;
- Acquisition d'une distance entre l'égo-véhicule et le véhicule cible, dite distance inter-véhiculaire ;
- Acquisition de la deuxième vitesse, dite vitesse du véhicule cible ;
- Détermination d'un temps de manoeuvre, *tm,* fondée sur la vitesse de l'égo-véhicule, sur la distance inter-véhiculaire, sur la vitesse du véhicule cible, et sur un temps inter-véhiculaire prédéterminé.

Ainsi, lorsque le véhicule cible est détecté, le temps de manoeuvre nécessaire pour réguler la vitesse de l'égo-véhicule à la vitesse du véhicule cible à l'aide du régulateur de vitesse est déterminé de façon à respecter le temps inter-véhiculaire prédéterminé. Ce temps de manoeuvre, contribue par exemple à déterminer l'instant où il faut commencer à modifier la vitesse consigne de l'égo véhicule.

Par exemple, si un véhicule cible est détecté au loin, la vitesse consigne du régulateur de vitesse de l'égo-véhicule est celle souhaitée par le conducteur le temps que l'égo-véhicule se rapproche du véhicule d'une durée du temps de manoeuvre déterminé. Ainsi, la vitesse régulée de l'égo-véhicule est maintenu le plus longtemps possible à celle de la vitesse souhaitée par le conducteur.

Avantageusement, le temps de manoeuvre est donné par l'équation $tm = k\dfrac{(D0 - V2*Tiv)}{(V1 - V2)}$, où $V1$ est la première vitesse, la vitesse de l'égo véhicule, $V2$ est la deuxième vitesse, vitesse du véhicule cible, $D0$ est la distance entre l'égo-véhicule et le véhicule cible, $Tiv$ est un temps inter-véhiculaire prédéterminé, $k$ est une constante prédéterminée.

Ainsi, le temps de manoeuvre est très facilement calculable nécessitant peu de ressources de calculs. Il peut être mis à jour périodiquement, et, ainsi, être un indicateur du contexte de la circulation contribuant à des stratégies de décision d'aides à la conduite comme l'instant où il faut commencer à adapter la vitesse consigne. Le temps de manoeuvre est paramétrable d'une part, par le temps inter-véhiculaire prédéterminé par le conducteur ou par défaut à la valeur recommandée par réglementation routière, et, d'autre part, par le paramètre k, un paramètre de calibration prenant en compte des incertitudes de mesures ou de caractéristiques dynamiques de l'égo-véhicule. Dans un mode opératoire préféré, le temps inter-véhiculaire prédéterminé est temps entre 0,5 secondes et 10 secondes, par exemple proche de 2 secondes, et la constante k prédéterminée est une valeur entre 0,5 et 20, par exemple proche de 2,5.

Avantageusement, le procédé comporte en outre une étape de détermination d'une trajectoire de vitesse consigne fondée sur le temps de manoeuvre, tm, la trajectoire de vitesse consigne étant utilisée par un régulateur de vitesse de véhicule pour adapter la vitesse de l'égo-véhicule de la première vitesse vers la deuxième vitesse. Une infinité de trajectoires de vitesse existe pour passer d'une première vitesse à une deuxième vitesse par un régulateur de vitesse véhicule. Le temps de manoeuvre étant déterminé, cela rend possible une optimisation plus simple de la détermination de la trajectoire de la vitesse de consigne du régulateur de vitesse.

Avantageusement, si la deuxième vitesse est inférieure à la première vitesse, la trajectoire de vitesse de consigne du régulateur de vitesse est telle qu'une dérivée seconde de la trajectoire de vitesse consigne par rapport au temps est négative pendant un temps tp prédéterminé, le temps tp étant inférieur au temps de manoeuvre tm.

Ainsi, un jerk du véhicule (dérivée de l'accélération par rapport au temps, ou également dérivée seconde de la vitesse par rapport au temps) est négatif du début de la manoeuvre jusqu'au au temps tp. Le jerk du véhicule est positif du temps tp au temps tm.

Le véhicule décélère alors plus fortement en début de la manoeuvre. Le jerk est bien ressenti par le conducteur. Dès le début de la manoeuvre, le conducteur comprend que le système ADAS a bien détecté le véhicule cible et a bien pris en compte l'adaptation de la vitesse de consigne. C'est un confort physiologique pour le conducteur.

Avantageusement, le temps tp est proche d'un tiers du temps de la manoeuvre. Ainsi, on peut démontrer, si la trajectoire de la vitesse consigne est un polynôme d'ordre 4, que :

- le jerk est maximum au début de la manoeuvre accentuant donc le ressenti du conducteur et la compréhension de la bonne détection du véhicule cible ;
- le jerk et l'accélération du véhicule restent bornés pendant toute l'adaptation de la première vitesse vers la deuxième vitesse, et
- le jerk tend vers 0 au temps de manoeuvre tm. Nous obtenons ainsi un bon confort dynamique pour les utilisateurs du véhicule, et évitant ainsi un tangage du véhicule, rotation par rapport au centre de gravité du véhicule, au temps tm.

Un deuxième aspect de l'invention concerne un dispositif comprenant une mémoire associée à au moins un processeur configuré pour mettre en oeuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :

[Fig. 1] illustre schématiquement un dispositif, selon un exemple particulier de réalisation de la présente invention.
[Fig. 2] illustre schématiquement un procédé de détermination d'un temps de manoeuvre d'un véhicule autonome selon un exemple particulier de réalisation de la présente invention.

L'invention est décrite ci-après dans son application, non limitative, au cas d'un véhicule automobile autonome circulant sur une route ou sur une voie de circulation.

D'autres applications telles qu'un robot dans un entrepôt de stockage ou encore une motocyclette sur une route de campagne sont également envisageables.

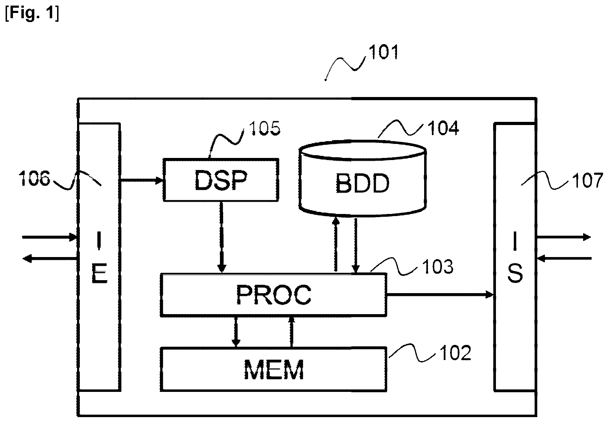

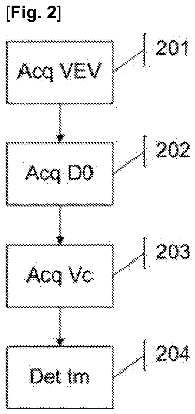

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en oeuvre par un processeur 103 d'au moins une étape du procédé tel que décrit ci-avant. Le dispositif comporte aussi une mémoire de masse 104 pour le stockage de données destinées à être conservées après la mise en oeuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en oeuvre par le procédé selon l'invention et une interface de sortie 107 pour la transmission des données mises en oeuvre par le procédé selon l'invention.

La figure 2 illustre schématiquement un procédé de détermination d'un temps de manoeuvre d'un véhicule autonome, dit égo-véhicule, circulant selon une première vitesse sur une voie de circulation, ledit égo-véhicule étant précédé par un véhicule, dit véhicule cible, circulant sur la voie de circulation selon une deuxième vitesse, la manoeuvre étant destinée à adapter la vitesse de l'égo-véhicule de la première vitesse vers la deuxième vitesse, selon un exemple particulier de réalisation de la présente invention.

Dans l'étape 201, Acq VEV, le dispositif 101 acquière la première vitesse, dite vitesse de l'égo-véhicule au travers de son interface d'entrée. La mesure de la vitesse de l'égo-véhicule est obtenue grâce aux organes classiquement présents dans un véhicule avec un système ADAS.

Dans l'étape 202, Acq D0, le dispositif 101 acquière une distance entre l'égo-véhicule et le véhicule cible, dite distance inter-véhiculaire, au travers de son interface d'entrée. La mesure de la distance inter-véhiculaire est obtenue grâce aux organes classiquement présents (LIDAR, RADAR, caméra, ...) dans un véhicule avec un système ADAS de type ACC. Dans un mode opératoire la mesure de la distance inter-véhiculaire est obtenue par l'infrastructure, comme par exemple par des capteurs intégrés à la chaussée ou par un dispositif de surveillance (caméra) en bord de chaussée. L'information est alors transmise à l'égo-véhicule par une communication radiofréquence de type V2I, véhicule-infrastructure, selon un protocole WIFI, 3G 4G, 5G, ...

Dans l'étape 203, Acq Vc, le dispositif 101 acquière la deuxième vitesse, vitesse du véhicule cible, au travers de son interface d'entrée. La mesure de la vitesse du véhicule cible est obtenue grâce aux organes classiquement présents (LIDAR, RADAR, caméra, ...) dans un véhicule avec un système ADAS de type ACC. Dans un mode opératoire la mesure de la vitesse du véhicule cible est obtenue par l'infrastructure, comme par exemple par des capteurs intégrés à la chaussée ou par un dispositif de surveillance (caméra) en bord de chaussée. L'information est alors transmise à l'égo-véhicule par une communication radiofréquence de type V2I, véhicule-infrastructure, selon un protocole WIFI, 3G 4G, 5G, ... Dans un autre mode opératoire la mesure de la vitesse du véhicule cible est obtenue par une communication d'informations entre l'égo-véhicule et le véhicule cible. L'information est alors transmise à l'égo-véhicule par une communication radiofréquence de type V2V, véhicule-véhicule, selon un protocole WIFI, 3G 4G, 5G, ...

Dans l'étape 204, Det tm, le dispositif 101 détermine un temps de manoeuvre, tm, fondée sur la vitesse de l'égo-véhicule, sur la distance inter-véhiculaire, sur la vitesse du véhicule cible, et sur un temps inter-véhiculaire prédéterminé. Dans un mode opératoire préféré le temps de manoeuvre est donné par l'équation

$$tm = k \frac{(D0 - V2 * Tiv)}{(V1 - V2)}$$

, où V1 est la première vitesse, la vitesse de l'égo véhicule, V2 est la deuxième vitesse, vitesse du véhicule cible, D0 est la distance entre l'égo-véhicule et le véhicule cible, Tiv est un temps inter-véhiculaire prédéterminé, k est une constante prédéterminée. Dans un mode opératoire le temps inter-véhiculaire prédéterminé, Tiv, est renseigné par un conducteur du véhicule au moyen d'une interface Homme-machine (écran tactile, bouton +/-, molette ...). Initialement, ce temps inter-véhiculaire est égal au temps recommandé par la réglementation (par exemple à 2 secondes). La constante prédéterminée k est un paramètre de calibration, dont toutes les valeurs sont possibles, prenant en compte des incertitudes de mesures ou de caractéristiques dynamiques de l'égo-véhicule. Dans un mode opératoire préféré, la constante k est proche de 2,5.

Avantageusement, le procédé selon l'invention comprend en outre une étape de détermination d'une trajectoire de vitesse consigne fondée sur le temps de manoeuvre, tm, la trajectoire de vitesse consigne étant utilisée par un régulateur de vitesse de véhicule pour adapter la vitesse de l'égo-véhicule de la première vitesse vers la deuxième vitesse.

Avantageusement, si la deuxième vitesse est inférieure à la première vitesse, la trajectoire de vitesse de consigne du régulateur de vitesse est telle qu'une dérivée seconde de la trajectoire de vitesse consigne par rapport au temps est négative pendant un temps tp prédéterminé, le temps tp étant inférieur au temps de manoeuvre tm. Dans un mode opératoire préféré, le temps tp est proche d'un tiers du temps de la manoeuvre.

Ainsi, un jerk du véhicule (dérivée de l'accélération par rapport au temps, ou également dérivée seconde de la vitesse par rapport au temps) est négatif du début de la manoeuvre au temps tp. Le jerk du véhicule est positif du temps tp au temps tm. Le véhicule décélère alors plus fortement en début de la manoeuvre. Le jerk est bien ressenti par le conducteur. Dès le début de la manoeuvre, le conducteur comprend que le système ADAS a bien détecté le véhicule cible et a bien pris en compte l'adaptation de la vitesse de consigne. C'est un confort physiologique pour le conducteur.

Ainsi, on peut démontrer, si la trajectoire de la vitesse consigne est un polynôme d'ordre 4, que :

- le jerk est maximum au début de la manoeuvre accentuant donc le ressenti du conducteur et la compréhension de la bonne détection du véhicule cible ;
- le jerk et l'accélération du véhicule restent bornés pendant toute l'adaptation de la première vitesse vers la deuxième vitesse, et
- le jerk tend vers 0 au temps de manoeuvre tm.

Nous obtenons ainsi un bon confort dynamique pour les utilisateurs du véhicule, et évitant ainsi un tangage du véhicule, rotation par rapport au centre de gravité du véhicule, au temps tm.

Autrement dit, avec l'invention, le véhicule ne commence à freiner ou décélérer qu'au moment où l'égo-véhicule est à une durée tm du véhicule cible. On commence à freiner fort pendant un temps court afin que le conducteur ressente bien, via le jerk, la décélération et donc qu'il comprenne bien que l'invention a bien détecté le véhicule précédent l'égo-véhicule. Le conducteur n'a donc pas de doute de la prise en compte du véhicule cible. La décélération maximum est atteinte au temps tp, Puis, du temps tp au temps tm, on freine moins fort, tranquillement pour accoster la vitesse du véhicule cible. La dynamique longitudinale du véhicule varie peu ce qui procure un confort dynamique pour les utilisateurs du véhicule.

La présente invention ne se limite pas aux formes de réalisation décrites ci-avant à titre d'exemples ; elle s'étend à d'autres variantes.

Ainsi, on a décrit ci-avant un exemple de réalisation dans lequel la manoeuvre destinée à adapter la vitesse de l'égo-véhicule de la première vitesse vers la deuxième vitesse est une décélération (la deuxième vitesse est plus petite que le première vitesse). L'invention s'étend également aux manoeuvres où la deuxième vitesse est plus grande que la première vitesse.

## Revendications

1. Procédé de détermination d'un temps de manoeuvre d'un véhicule autonome, dit égo-véhicule, circulant selon une première vitesse sur une voie de circulation, ledit égo-véhicule étant précédé par un véhicule, dit véhicule cible, circulant sur la voie de circulation selon une deuxième vitesse, la manoeuvre étant destinée à adapter la vitesse de l'égo-véhicule de la première vitesse vers la deuxième vitesse, ledit procédé, ledit procédé étant mis en oeuvre par un processeur et comportant les étapes de :

   - Acquisition (201) de la première vitesse, dite vitesse de l'égo-véhicule ;
   - Acquisition (202) d'une distance entre l'égo-véhicule et le véhicule cible, dite distance inter-véhiculaire ;
   - Acquisition (203) de la deuxième vitesse, dite vitesse du véhicule cible ;

   Détermination (204) d'un temps de manoeuvre, *tm,* fondée sur la vitesse de l'égo-véhicule, sur la distance inter-véhiculaire, sur la vitesse du véhicule cible, et sur un temps inter-véhiculaire prédéterminé, le temps de manoeuvre est donné par l'équation $tm = k \dfrac{(D0 - V2*Tiv)}{(V1 - V2)}$, où *V1* est la première vitesse, la vitesse de l'égo véhicule, *V2* est la deuxième vitesse, vitesse du véhicule cible, *D0* est la distance entre l'égo-véhicule et le véhicule cible, *Tiv* est un temps inter-véhiculaire prédéterminé, *k* est une constante prédéterminée.

2. Procédé selon l'une des revendications précédentes, dans lequel le procédé comporte en outre une étape de détermination d'une trajectoire de vitesse consigne fondée sur le temps de manoeuvre, tm, la trajectoire de vitesse consigne étant utilisée par un régulateur de vitesse de véhicule pour adapter la vitesse de l'égo-véhicule de la première vitesse vers la deuxième vitesse.

3. Procédé selon la revendication 2, dans lequel, si la deuxième vitesse est inférieure à la première vitesse, la trajectoire de vitesse de consigne du régulateur de vitesse est telle qu'une dérivée seconde de la trajectoire de vitesse consigne par rapport au temps est négative pendant un temps tp prédéterminé, le temps tp étant inférieur au temps de manoeuvre tm.

4. Procédé selon la revendication 3, dans lequel le temps tp est égal à un tiers du temps de la manoeuvre.

5. Dispositif (101) comprenant une mémoire (102) associée à au moins le processeur (103) et mettant en oeuvre le procédé selon l'une des revendications précédentes.

6. Véhicule comportant le dispositif selon la revendication précédente.

7. Programme d'ordinateur comprenant des instructions exécutant les étapes du procédé selon l'une des revendications 1 à 4 lorsque ledit programme est exécuté par au moins le processeur (103).

**Patentansprüche**

1. Verfahren zur Bestimmung einer Manövrierzeit eines autonomen Fahrzeugs, Ego-Fahrzeug genannt, das mit einer ersten Geschwindigkeit auf einer Fahrspur fährt, wobei dem Ego-Fahrzeug ein Fahrzeug vorausgeht, das Zielfahrzeug genannt wird und mit einer ersten Geschwindigkeit auf der Fahrspur fährt zweite Geschwindigkeit, wobei das Manöver dazu dient, die Geschwindigkeit des Ego-Fahrzeugs von der ersten Geschwindigkeit an die zweite Geschwindigkeit anzupassen, wobei das Verfahren von einem Prozessor implementiert wird und die Schritte umfasst:

- Erfassung (201) der ersten Geschwindigkeit, genannt Geschwindigkeit des Ego-Fahrzeugs;
- Erfassung (202) eines Abstands zwischen dem Ego-Fahrzeug und dem Zielfahrzeug, genannt Fahrzeugabstand;
- Erfassung (203) der zweiten Geschwindigkeit, genannt Geschwindigkeit des Zielfahrzeugs;

Bestimmung (204) einer Manövrierzeit *tm* , basierend auf der Geschwindigkeit des Ego-Fahrzeugs, auf dem Abstand zwischen den Fahrzeugen, auf der Geschwindigkeit des Zielfahrzeugs und auf einer vorgegebenen Zeit zwischen den Fahrzeugen, der Zeit des Manövers gegeben durch die Gleichung

$$tm = k\frac{(D0-V2*Tiv)}{(V1-V2)}$$ , wobei *V1* der erste Gang ist, die Geschwindigkeit des Ego-Fahrzeugs, *V2* der zweite Gang ist, die Geschwindigkeit des Zielfahrzeugs, *D0* der Abstand zwischen dem Ego-Fahrzeug und dem Zielfahrzeug, *Tiv* ein vorgegebener Inter- Fahrzeugzeit, *k* ist eine vorgegebene Konstante.

2. Verfahren nach einem der vorhergehenden Ansprüche, wobei das Verfahren weiterhin einen Schritt des Bestimmens einer Sollgeschwindigkeits-Trajektorie basierend auf der Manövrierzeit tm umfasst, wobei die Soll-Geschwindigkeits-Trajektorie von einem Fahrzeuggeschwindigkeitsregler verwendet wird, um die Geschwindigkeit des Ego-Fahrzeugs anzupassen. Fahrzeug vom ersten Gang in den zweiten Gang.

3. Verfahren nach Anspruch 2, bei dem, wenn die zweite Geschwindigkeit kleiner als die erste Geschwindigkeit ist, die Sollgeschwindigkeitstrajektorie des Geschwindigkeitsreglers so ist, dass eine zweite Ableitung der Sollgeschwindigkeitstrajektorie nach der Zeit während einer vorgegebenen Zeit tp negativ ist, wobei die Zeit tp kleiner als die Manövrierzeit tm ist.

4. Verfahren nach Anspruch 3, bei dem die Zeit tp einem Drittel der Zeit des Manövers entspricht.

5. Vorrichtung (101), die einen Speicher (102) umfasst, der zumindest dem Prozessor (103) zugeordnet ist und das Verfahren nach einem der vorhergehenden Ansprüche implementiert.

6. Fahrzeug umfassend die Vorrichtung nach dem vorhergehenden Anspruch.

7. Computerprogramm, das Anweisungen umfasst, die die Schritte des Verfahrens nach einem der Ansprüche 1 bis 4 ausführen, wenn das Programm von mindestens dem Prozessor (103) ausgeführt wird.

**Claims**

1. Method for determining a maneuvering time of an autonomous vehicle, called an ego-vehicle, traveling at a first speed on a traffic lane, said ego-vehicle being preceded by a vehicle, called a target vehicle, traveling on the traffic lane at a second speed, the maneuver being intended to adapt the speed of the ego-vehicle from the first speed to the second speed, said method, said method being implemented by a processor and comprising the steps of:

- Acquisition (201) of the first speed, called the speed of the ego-vehicle;
- Acquisition (202) of a distance between the ego-vehicle and the target vehicle, called inter-vehicular distance;
- Acquisition (203) of the second speed, called the speed of the target vehicle;

Determining (204) a maneuvering time, *tm* , based on the speed of the ego-vehicle, on the inter-vehicular distance, on the speed of the target vehicle, and on a predetermined inter-vehicular time, the maneuvering time is given by the equation

$$tm = k\frac{(D0-V2*Tiv)}{(V1-V2)}$$ , where *V1* is the first speed, the speed of the ego-vehicle, *V2* is the second speed, speed of the target vehicle, *D0* is the distance between the ego-vehicle and the target vehicle, *Tiv* is a predetermined inter-vehicular time, *k* is a predetermined constant.

2. Method according to one of the preceding claims, in which the method further comprises a step of determining a target speed trajectory based on the maneuvering time, tm , the target speed trajectory being used by a vehicle cruise control to adapt the speed of the ego-vehicle from the first speed to the second speed.

3. A method according to claim 2, wherein, if the second speed is less than the first speed, the set speed trajectory of the speed regulator is such that a second derivative of the set speed trajectory with respect to time is negative for a predetermined time tp , the time tp being less than the maneuvering time tm .

4. Method according to claim 3, in which the time tp is equal to one third of the time of the maneuver.

5. Device (101) comprising a memory (102) associated with at least the processor (103) and implementing the method according to one of the preceding claims.

6. Vehicle comprising the device according to the preceding claim.

7. Computer program comprising instructions executing the steps of the method according to one of claims 1 to 4 when said program is executed by at least the processor (103).

EP 4 240 629 B1

[Fig. 1]

8

[Fig. 2]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102015221920